# EUROPEAN PATENT APPLICATION

(11) **EP 3 748 755 A1**
(43) Date of publication of application: **09.12.2020**
(21) Application number: 19178219.2
(22) Date of filing: 04.06.2019
(51) Int. Cl.: H01M 10/04, H01M 2/26, H01M 2/02, H01M 2/20

(54) **CELL BATTERY**

(71) Applicant: Renata AG, 4452 Itingen (CH)
(72) Inventor: WANG, Xiaojun, 4455 Zunzgen (CH); FREY, Remo, 4425 Titterten (CH); HAERING, Pascal, 4132 Muttenz (CH)
(74) Representative: ICB SA

(57) **Abstract**

The invention relates to a cell (100) comprising a metal case (119) having a positive side (108) and a negative side (101) designed to form a housing (117), an assembly (113) of stacked electrodes placed inside the housing (117) and comprising one or more units (120) each comprising a positive electrode (103), a negative electrode (104) and a separator (102) between the positive and negative electrodes (103,104), characterized in that the positive electrodes (103) of the one or more units (104) are electrically connected together to form a positive terminal (111) and the negative electrodes (104) of the one or more units (104) are electrically connected together to form a negative terminal (112), the positive terminal (111) being folded substantially vertically towards the positive side (108) of the case (119) and the negative terminal (112) being folded substantially vertically towards the negative side (101) of the case (119).

## Description

### Field of the invention

The present invention relates to power supplier systems and, more particularly to batteries, which can be used as power supplier, *inter alia,* for wear electronic devices. The present invention specifically relates to a cell comprising a metal case having a positive side and a negative side designed to form a housing, an assembly of stacked electrodes placed inside the housing and comprising one or more units each comprising a positive electrode, a negative electrode, a separator between the positive and negative electrodes and an electrolyte.

### Background of the invention

Recent developments on portable and wearable electronic devices are requiring minimized power supplier systems, namely cells which can provide high volumetric energy and power density. The electrode stack is a suitable design that can effectively fulfill the requirements for such type of application. A stacked cell including a stack of positive and negative electrodes is known in the art. A separator is provided between the positive and negative electrodes to prevent short circuit, while allowing sufficient ionic conductivity from one half cell to the other. Such a battery including an assembly of stacked electrodes is disclosed for example in patent US 3907599 B1, in patent publication EP 2610945 A1 or in patent publication EP 3139434 A1. The assembly of stacked electrodes is connected to an external circuitry via contact tabs protruding from the positive and negative electrodes respectively.

When designing the cell with these stacked electrodes, the person skilled in the art faces the problem of how to maximize the use of the available volume to optimize the overall power density of the cell and he or she needs to consider, among other aspects, the size and shape of the electrodes, the design of the terminal tabs, the design of the means of contact between the electrodes and the terminal tabs, as well as the design of the electrode packing. All the above considerations must also take into account that the overall manufacturing process of the designed cell has to be kept as simple and as cost-effective as possible.

The design of the cells of the prior art have to leave the welded electrode tabs flat and free, which dramatically increases the risk of short circuits when the negative tabs accidentally contact the positive side and the positive tabs accidentally contact the negative side of the cell metal case.

The risk of short circuit caused by flat tabs requires higher precision during the assembly process and dramatically increases the scrap rate of production. Furthermore, it causes uncertain self-discharge when the batteries are delivered to the end user.

The large empty space for the flat welded tabs causes a waste of volume within the cell itself, thus limiting its overall energy density.

Furthermore, the large empty space left by flat welded tabs enables the electrode stack to move against the metal case when external forces are applied. Therefore, the movement of the electrode stack increases the risk of defects and functional failure during transportation and/or use of the cell.

There is therefore a need for an alternative cell design enabling to overcome the drawbacks mentioned above.

### Summary of the invention

The present invention refers to a cell comprising a metal case having a positive side and a negative side designed to form a housing, an assembly of stacked electrodes placed inside the housing and comprising one or more units each comprising a positive electrode, a negative electrode, a separator between the positive and the negative electrodes and an electrolyte, characterized in that the positive electrodes of the one or more units are electrically connected together to form a positive terminal and the negative electrodes of the one or more units are electrically connected together to form a negative terminal, the positive terminal being folded substantially vertically towards the positive side of the case and the negative terminal being folded substantially vertically towards the negative side of the case.

In one embodiment of the present invention, each positive and each negative electrode of the one or more units comprise, respectively, a cathode tab and an anode tab, the cathode tabs are welded together to form the positive terminal and the anode tabs are welded together to form the negative terminal.

In another embodiment of the present invention, the cell further comprises holding means for holding together the one or more units.

In yet a further embodiment of the present invention, the case comprises a gasket.

According to another embodiment of the present invention, the cell comprises a packing tape comprising a basis placed between the assembly and the case. In another embodiment, the packing tape is an insulating packing tape to avoid electrical contact between the assembly and the case.

According to another embodiment of the present invention, at least each negative electrode of the one or more units comprises one or more notches, vertically aligned along the height of the assembly, so to design a substantially flat contact surface for the holding means.

In another embodiment, the holding means are in form of adhesive tape, adhesive glues, clamps or combinations thereof.

In an embodiment, the holding means comprises rubber-based material, acrylic-based material, silicone-based material or combinations thereof.

In another embodiment of the present invention, the holding means comprises at least one packing flap which is integral with the basis. In yet another embodiment, the basis and the packing flap independently comprise a substrate made of polyesters, polyolefins, polyimides, fluoropolymers, vinyl polymers, styrol polymers, glass fiber based substrates, cellulose based material, derivatives thereof or combinations thereof.

According to a further embodiment of the present invention, each negative electrode has a larger surface than each positive electrode of the one or more units, and only each negative electrode of the one or more units comprises the at least one notch.

In still another embodiment of the present invention, the cell further comprises a contact tab placed between the packing tape and the positive metal case which is adjacent to said insulating packing tape, said contact tab being arranged to lead contact between the positive terminal and the positive side.

In yet still another embodiment, the cell is a coin cell.

In a further aspect, the present invention relates to a method for producing a cell as defined above, comprising the steps of:
a) stacking together alternatively a positive electrode having a cathode tab and a negative electrode having an anode tab, by placing a separator in-between them to form an assembly of stacked electrodes;
b) welding together the cathode tabs to obtain a positive terminal and the anode tabs to obtain a negative terminal;
c) folding the positive terminal substantially vertically into one direction and the negative terminal substantially vertically into the opposite direction;
d) filling the assembly of stacked electrodes obtained under c) with an electrolyte;
e) placing the assembly of stacked electrodes obtained under d) into a metal case having a positive and a negative side, wherein the positive terminal is placed towards the positive side and the negative terminal towards the negative side;
f) assembling the cases.

Alternatively, steps d) and e) may be inverted in the method described above, that is the assembly of stacked electrodes is first placed into the case and then filled with an electrolyte.

The cell according to the present invention shows increased tightness and provides better and more sustainable performance. Due to the folded positive and negative terminals, the cell according to the present invention enables to improve the volume utilization of the active electrode material, thus substantially increasing the cell energy density.

Furthermore, the cell according to the present invention enables an increased overall tightness of the electrode stack against the case of the cell and, accordingly, it ensures a more reliable performance when external forces are applied.

The assembly process of the cell is also less complex whereby the short-circuit risk, and therefore the scrap rate, is minimized.

### Brief description of the drawings

The aims, advantages and features of the present invention will appear more clearly in the following detailed description of at least one embodiment of the invention, given solely by way of example, in a non-limiting manner and illustrated by the annexed drawings in which:
Figure 1 illustrates a perspective view of a lithium coin cell of the present invention;
Figure 2 illustrates schematically an exploded view of the lithium coin cell of Figure 1;
Figure 3 is a perspective view from the negative welding joint of an assembly of stacked electrodes of the coin cell of Figure 1;
Figure 4 is a perspective view from the positive welding joint of an assembly of stacked electrodes of the coin cell of Figure 1;
Figure 5 is a detail of a perspective view of an assembly of stacked electrodes of the coin cell of Figure 1 with different holding means which can be used alone or in combination.
Figure 6 is a cross section of a plan view of the coin cell of Figure 1 viewed from the top.
Figure 7 is a cross section of the coin cell of Figure 1 showing the folded positive welding joint.

### Detailed description of the invention

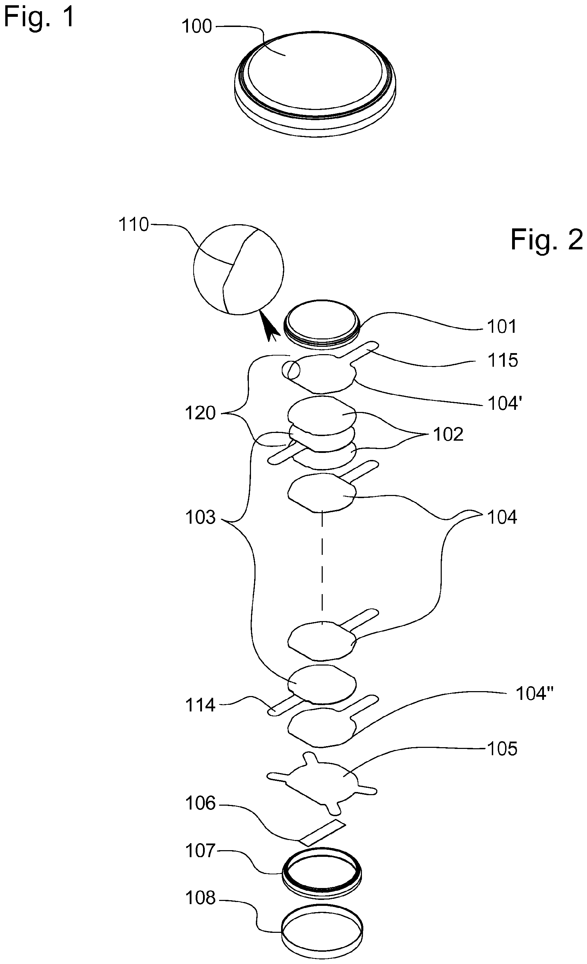

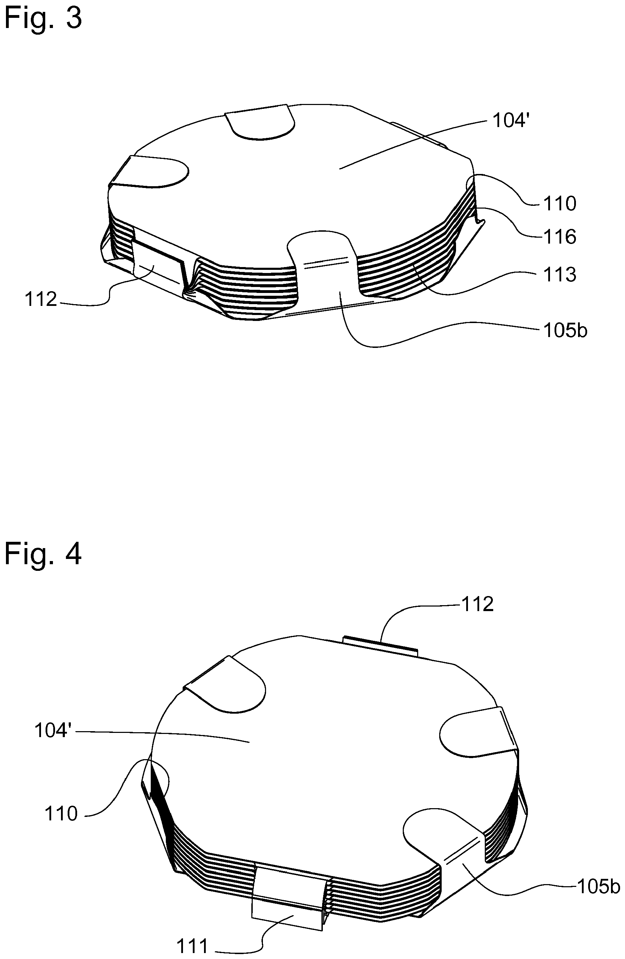

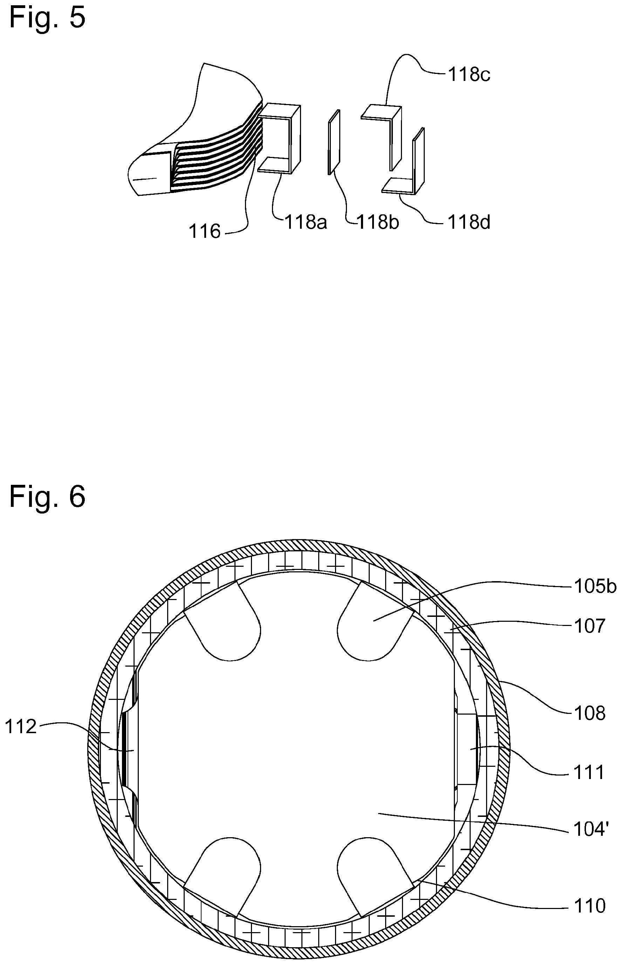

Referring to Figures 1 to 7, a lithium coin cell 100 comprises a case 119 consisting of two metallic sides, more specifically a lid 101 corresponding to the negative electrode case, and a cup 108, corresponding to the positive electrode case. When the lid 101 and the cup 108 have been assembled, they form between each other a housing 117, inside which an assembly of stacked electrodes 113 is placed (Figure 6). A gasket 107 is sandwiched between the lid 101 and the cup 108, the lid 101 having been pressed into said gasket 107.

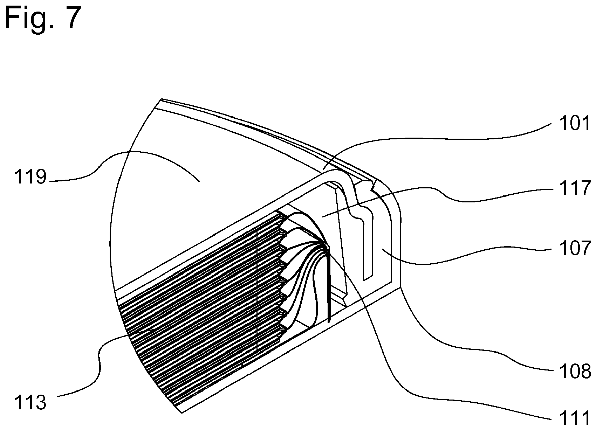

The assembly 113 is made of several units 120 each comprising a negative electrode 104 (anode), electrolyte (not shown) a positive electrode 103 (cathode) and a separator 102 between the negative and positive electrodes 104,103. Each negative electrode 104 comprises an anode tab 115 which is designed to lead contact to the lid 101. Each positive electrode 103 has a cathode tab 114 which is designed to lead contact to the cup 108. All the anode tabs 115 are welded together to form a negative welding joint 112 which electrically connects the negative electrodes 104 to the lid 101 via a first negative electrode 104' and all the cathode tabs 114 are welded together to form a positive welding joint 111 which electrically connects the positive electrodes 103 to the cup 108 via an additional positive contact tab 106, as explained below. As shown in Figure 7, the positive welding joint 111 is folded substantially vertically towards the positive side 108 of the case 119 and the negative welding joint 112 is folded substantially vertically towards the negative side 101 of the case 119 (not shown). In this way, it is possible to avoid accidental contact of the welding joints 111 and 112 to the wrong poles of the cell 100 during assembly and use, thus preventing the risk of short circuit. The cross section in Figure 7 clearly shows that the folding of the welding joints 111 and 112 enables to expand the assembly 113 closely to the gasket 107, thus increasing the energy density of the cell 100.

In one embodiment, as shown for example in figure 6 the positive and negative welding joints 111,112 are positioned on opposite sides of the assembly 113. Alternatively, the positive and negative welding joints 111,112 can be positioned in any other configuration around the edge of the assembly 113.

Lithium metal or lithium contained alloy, graphite-like materials, metal oxide, sulphide, nitride etc. that have low reduction potential can be used as active anode materials. Generally, lithium salt dissolving in no aqueous system is used as electrolyte, gel-like electrolyte is applied in lithium polymer battery and solid electrolyte can be used in solid-state lithium battery. Cathodes are the compounds that can take the lithium ions into the structure along with electrochemical reaction and meanwhile produce energy. Compounds such as sulphur, metal oxide, sulphide, phosphate, silicate etc. can be used as cathode active materials.

The staked electrode construction is applied in lithium battery with high power performance. To achieve this goal, cathode and anode materials are coated on metallic foil or mesh, and then stacked together alternatively with the separator 102 placed in-between them. The materials of the separator 102 can be chosen among the polymers with porous structure, such as polyethylene (PE), polypropylene (PP), polyvinylidene fluorides (PVDF), polyethylene terephthalates (PET) or mixtures thereof. Electrolyte is filled into the stacked electrodes.

The electrodes 103 and 104 of the assembly 113 are substantially disc-shaped. The positive electrodes 103 are enclosed in bag-like separators 102 and the electrodes 103 and 104 are alternately stacked one upon the other in order to form the substantially cylindrical stack 113 having a certain height or thickness. The assembly 113 comprises a negative electrode 104 at both of end surfaces, a first negative electrode, also numbered 104', being adjacent to the lid 101 and a last negative electrode, also numbered 104", being placed at the other end of the stack. The negative electrodes 104, 104' and 104" are both side coated electrodes. In another embodiment, the negative electrodes 104' and 104"are single side coated, wherein the blank metallic sides face the lid 101 and optionally a tape 105, respectively. In another embodiment, the blank metallic side of the negative electrodes 104' and 104" may comprise a conductive coating with carbon, structured as amorphous, crystalline, or graphene.

In one embodiment, the negative electrodes 104 have a total disc surface which is larger than the positive electrodes 103 and each negative electrode 104 comprises four notches 110 symmetrically positioned around its edge. The notches 110 of each negative electrode 104 are vertically aligned along the height of the assembly 113 so to design a substantially flat contact surface 116, as shown in Figures 2 to 6. The notches 110 may have different shapes depending on which means are used for holding together the assembly 113, as will be shown below. In one embodiment, the notches 110 have a substantially squared shape so to design a squared contact surface 116.

As shown in the Figures, the coin cell 100 may further comprise an insulating packing tape 105 comprising an insulator basis 105a and, in this shown embodiment, four holding means in form of packing flaps 105b, extending symmetrically from either side of the insulator basis 105a. The packing flaps 105b are designed in such a way to fit to the flat contact surface 116 formed by the notches 110 on the edge of the negative electrodes 104. In other embodiments, the packing flaps 105b may comprise any other appropriate number of packing flaps wherein the corresponding flat contact surfaces 116 will be arranged accordingly. In another embodiment, as shown in Figure 5, the holding means may be in form of an adhesive tape 118b, adhesive glue (not shown), clamps 118a, 118c, 118d. The shape of such alternative holding means is designed to fit the flat contact surface 116 of the assembly 113. The holding means (105b,118a,118b,118c,118d) comprises rubber-based material, acrylic-based material, silicone-based material or combinations thereof.

The insulating packing tape 105 should be placed in such a way that the insulator basis 105a is between the assembly of stacked electrodes and one of the cases to avoid electrical contact between the assembly of stacked electrodes and said case and the packing flaps 105b hold the assembly 113 of stacked electrodes to form a compact electrode pack. More particularly, the insulating packing tape 105 is placed in such a way that the insulator basis 105a is between the last negative electrode 104" and the cup 108 in order to avoid the electrical contact between said last negative electrode 104" and the cup 108.

The packing flaps 105b are folded along the height or the thickness of the assembly of stacked electrodes and folded back against the first negative electrode 104' to hold and pack said assembly 113 of stacked electrodes tightly, as shown in Figures 2,3 and 5.

In this embodiment, the insulator basis 105a and the packing flaps 105b form one piece. In another embodiment, the packing flaps 105b may be manufactured separately and then being made integral with or attached to the insulator basis 105a by any suitable means known to one skilled in the art.

The insulator basis 105a and the packing flaps 105b comprise a substrate made of a material selected from the group comprising polyesters, polyolefins, polyimides, fluoropolymers, vinyl polymers, and an adhesive layer facing the assembly of stacked electrodes. Said adhesive layer is made of a material selected from the group comprising rubber-based material, acrylic-based material and silicone-based material. In other embodiments, the adhesive layer may be provided only on the packing flaps 205b on its side facing the assembly of stacked electrodes.

In a preferred embodiment, the insulating packing tape 105 is made of Kapton® which comprises a polyimide substrate and an acrylate adhesive layer.

The shape of the insulating packing tape 105 can be designed according to the form of the positive and negative electrodes. Preferably, the insulator basis 105a has a larger area than the facing last negative electrode 104" of the assembly of stacked electrodes, in order to minimize a short circuit risk from contacting the last negative electrode 104" and cup 108.

The coin cell 100 further comprises an additional metallic positive contact tab 106 placed between the insulating packing tape 105 and the cup 108, said additional positive contact tab 106 being arranged to lead contact between the positive electrodes 103 to said cup 108. Said additional positive contact tab 106 is arranged to be welded with the positive contact tabs 114.

The coin cell 100 of the invention is assembled by a method comprising the steps of:
a) stacking together alternatively the positive electrodes 103 and the negative electrodes 104, by placing a separator 102 in-between them to form an assembly of stacked electrodes;
b) optionally holding the assembly of stacked electrodes obtained under a) with holding means 105b,118a,118b,118c and/or 118d;
c) optionally packing the assembly of stacked electrodes obtained under b) with said insulating packing tape 105;
d) welding the anode tabs 114 together to form the negative welding point 112, and the cathode tabs 115 with the additional positive contact tab 106 together to form a positive welding point 111;
e) folding the welding joint 111 substantially vertically toward the positive side 108 of the case 119 and the negative welding joint 112 substantially vertically towards the negative side 101 of the case 119.
f) filling assembly of stacked electrodes obtained under c) or d) with electrolyte;
g) placing the assembly of stacked electrodes obtained under e) into the lid 101 and the cup 108.
h) assembling the lid 101 and the cup 108 by pressing the lid 101 into the gasket 107 to close the coin cell 100.

The sequence of the steps f) and g) of filling the obtained assembly can be operated in either order.

## Claims

1. A cell (100) comprising a metal case (119) having a positive side (108) and a negative side (101) designed to form a housing (117), an assembly (113) of stacked electrodes placed inside the housing (117) and comprising one or more units (120) each comprising a positive electrode (103), a negative electrode (104), a separator (102) between the positive and the negative electrodes (103,104) and an electrolyte, **characterized in that** the positive electrodes of the one or more units are electrically connected together to form a positive terminal and the negative electrode of the one or more units are electrically connected together to form a negative terminal, the positive terminal being folded substantially vertically towards the positive side (108) of the case (119) and the negative terminal (112) being folded substantially vertically towards the negative side (101) of the case (119).

2. The cell (100) according to claim 1, wherein each positive and each negative electrode (103,104) of the one or more units (120) comprise, respectively, a cathode tab (114) and an anode tab (115), the cathode tabs (114) are welded together to form the positive terminal (111) and the anode tabs are welded together to form the negative terminal (112).

3. The cell (100) according to any preceding claim, further comprising holding means (105b,118a,118b,118c,118d) for holding together the one or more units (120).

4. The cell (100) according to any preceding claim, wherein the case (119) further comprises a gasket (107).

5. The cell (100) according to any preceding claims, further comprising a packing tape (105) comprising a basis (105a) placed between the assembly (113) and the case (119).

6. The cell (100) according to claim 5, wherein the packing tape (105) is an insulating packing tape to avoid electrical contact between the assembly (113) and the case (119).

7. The cell (100) according to any claim 3 to 6, **characterized in that** at least each negative electrode (104) of the one or more units (120) comprises one or more notches (110), vertically aligned along the height of the assembly (113) so to design a substantially flat contact surface (116) for the holding means (105b,118a,118b,118c,118d).

8. The cell (100) according to any claim 3 to 7, wherein the holding means (105b,118a,118b,118c,118d) are in form of adhesive tape, adhesive glues, clamps or combinations thereof.

9. The cell (100) according to any claim 3 to 8, wherein the holding means (105b,118a,118b,118c,118d) comprises rubber-based material, acrylic-based material, silicone-based material or combinations thereof.

10. The cell (100) according to any claim 5 to 9, wherein the holding means comprises at least one packing flap (105b) which is integral with the basis (105a).

11. The cell (100) according to claim 10, wherein the basis (105a) and the packing flap (105b) independently comprise a substrate made of polyesters, polyolefins, polyimides, fluoropolymers, vinyl polymers, styrol polymers, glass fiber based substrates, cellulose based material, derivatives thereof or combinations thereof.

12. The cell (100) according to any claim 7 to 11, wherein each negative electrode (104) has a larger surface than each positive electrode (103) of the one or more units (120) and only each negative electrode (104) of the one or more units (120) comprises the at least one notch (110).

13. The cell (100) according to any claim 5 to 12, wherein it further comprises a contact tab (106) placed between the packing tape (105) and the positive metal case (108) which is adjacent to said insulating packing tape (105), said contact tab (106) being arranged to lead contact between the positive terminal (111) and the positive side (108).

14. The cell (100) according to any preceding claim, which is a coin cell.
